Europäisches Patentamt

European Patent Office

Office européen des brevets

(11) Publication number: **0 448 197 A2**

# EUROPEAN PATENT APPLICATION

(21) Application number: **91300596.3**

(22) Date of filing: **25.01.91**

(51) Int. Cl.⁵: **H04M 1/72**

(30) Priority: **17.02.90 GB 9003637**

(43) Date of publication of application:
**25.09.91 Bulletin 91/39**

(84) Designated Contracting States:
**AT BE CH DE DK ES FR GR IT LI LU NL SE**

(71) Applicant: **GEC PLESSEY
TELECOMMUNICATIONS LIMITED
New Century Park P.O. Box 53
Coventry, CV3 1HJ(GB)**

(72) Inventor: **Barnes, Nigel Everard
c/o Hodson, 26 Eggars Field
Farnham, Surrey GU10 5LD(GB)**
Inventor: **Driscoll, John Patrick
20 Deddington Lane
Bramcote Hills, Nottingham NE9 3EW(GB)**

(74) Representative: **MacKenzie, Ian Alastair
Robert
The General Electric Company, p.l.c. Central
Patent Department Wembley Office Hirst
Research Center East Lane
Wembley Middlesex HA9 7PP(GB)**

(54) **Cordless telecommunications apparatus.**

(57) Telecommunications apparatus is provided for use in a cordless telephone environment. When a handset wants to contact a base station it communicates therewith over a radio channel selected by the handset. This channel may not be the most suitable for communication purposes. The base station, in dependence upon its signal strength information may determine a better channel. In this case, the base station instructs the handset to switch to the channel and the base station switches to the channel, and communication continues on the selected channel.

## Fig.1.

EP 0 448 197 A2

The present invention relates to a telecommunications apparatus of the type employing cordless telephones.

The present invention is particularly applicable to a second generation of cordless telephones commonly referred to as "CT2".

An overall system in which the present invention may be employed is described in pending patent application number EP 90300863.9 incorporated herein by reference.

British Standard BS6833, incorporated herein by reference, governs CT2 apparatus. It describes the apparatus' use when connected to the public network, and over the radio frequency link that is set-up between the portable part, (the handset) and fixed part (the base station). Each part has access to forty allocated radio frequency (RF) channels. When either part wishes to establish a link for the purposes of making a telephone call, the part involved scans all forty channels in order to find one channel suitable for communication purposes.

Once a channel has been selected, the initiating part begins to radiate an identification pattern on the selected channel. The pattern is commonly known as a 'handshake', and permits the non-initiating part to detect that a call request has been made. The non-initiating part replies to the initiating part on the same RF channel also using the handshake, and in due course an end to end RF link is established between the two parts allowing communications of voice and signalling data between the two parts.

The transmission method employed in CT2 is called Burst Mode Transmission. The information to be transmitted is accumulated in a respective transmitter located in the fixed and portable part, and transmitted in a 'burst' to a respective receiver located in the fixed and portable part. After a transmitter has transmitted a burst, it is switched off, and the receiver in same part is switched on, expecting to receive a similar burst from the other part. The bursts are transmitted and received on the same radio frequency.

Part of the service envisaged for CT2 apparatus is to provide a so-called 'telepoint' or 'phone point' public service, where owners of suitable handsets can register their handsets with one or more service providers, such that these handsets can be used to make outgoing calls in the public domain with suitably located radio base stations, to in effect replace or become an adjunct to public telephone boxes. In some locations, there is likely to be a relatively high density of handsets and base stations using and providing the service.

This high density results in a high level of radio interference, so that at any given handset or base station, signals received from nearby radio parts may drown out the signals received from distant radio units, due to interference caused by intermodulation products and adjacent channel effects.

Where high density coverage is required, base station radio units will share a common housing and antenna. In order for this to be possible, the various radio parts need to be synchronised, such that all the radio units, when active, transmit and receive in unison.

This synchronisation ensures that base stations receive interference only from handsets, and handsets receive interference only from base stations.

When a handset wants to establish a link to a base unit, it selects a channel after having scanned all 40 channels as laid down in BS6833: Part 2 Section 18.3.

For the case of a single telepoint base station (multi-line), the interference at a handset is often less severe than that at the base station. This is because the interfering signals arriving at a handset, originate from the same location as the wanted signal i.e. from the base station. However the interfering signals arriving at the base station, originate from the different handset locations. For handsets which are distant from the base station, the signal received from them by the base station will be weak. The interfering signals, however, may originate from handsets which are close to the base station, and be at a high level.

In view of the interference problem at the handset and base station, it would be advantageous for the channel selection to be based on measurements taken at the base station, rather than those taken at the handset when it wishes to establish a link.

An aim of the present invention is to overcome the above mentioned problem by providing the base unit with means for selecting a channel based on its Received Signal Strength Indication (RSSI information).

According to the present invention there is provided telecommunications apparatus comprising at least one base unit for connection to a telecommunications system, and at least one handset arranged to communicate with the base unit, each base unit including means for obtaining signal strength information in respect of each communication channel, and said handset is arranged to select a channel for communication with the base unit, characterised in that the telecommunications apparatus is arranged to perform a method comprising the steps of causing the base unit, in dependence upon its signal strength information, to select suitable channel for communication, causing the base unit to instruct the handset to switch to the selected channel, and causing the base unit to switch to the selected channel.

An embodiment of the present invention will now be described with reference to the accompanying drawings wherein:-

Figure 1 shows a block diagram of a handset control circuit,

Figure 2 shows a block diagram of a base unit (station) control circuit, and,

Figure 3 shows a flow diagram of the actions taken by a handset and base station when a link is set-up in response to a call made by the handset,

Figure 4 shows a block diagram of additional hardware necessary for performing the invention and,

Figure 5 shows a flow diagram of further actions taken by the base station over those shown in Figure 3.

Communication between the handset and base unit takes place on three logical channels, known as the B channel, S channel and D channel. The B channel carries data which the user is transmitting or receiving. The D channel carries signalling information. The S channel carries synchronisation information and is used to synchronise the base unit and handset when a link between the two is being set-up.

There are four synchronisation words used in the S channel.

The handset uses a channel marker word designated CHMP and sync word designated SYNCP. The base station uses a channel marker word designated CHMF and sync word designated SYNCF.

The structure of the data bursts are multiplexed in various ways and are identified as multiplex 1, MUX 1, multiplex 2, MUX 2 and multiplex 3, MUX 3.

The data structure MUX 1 is used to transfer the bursts of user data once a link has been set-up. It takes two forms, multiplex 1.2 and 1.4 depending upon how the multiplex is formatted. The data structure MUX 2 is used in setting up a link before communication begins over the B channel. The data structure MUX 3 is used by the handset for making a link request when the handset is not already in communication with the base station, and therefore not synchronised with it.

The data structures and synchronisation mechanisms are described in more detail in the above mentioned pending patent application.

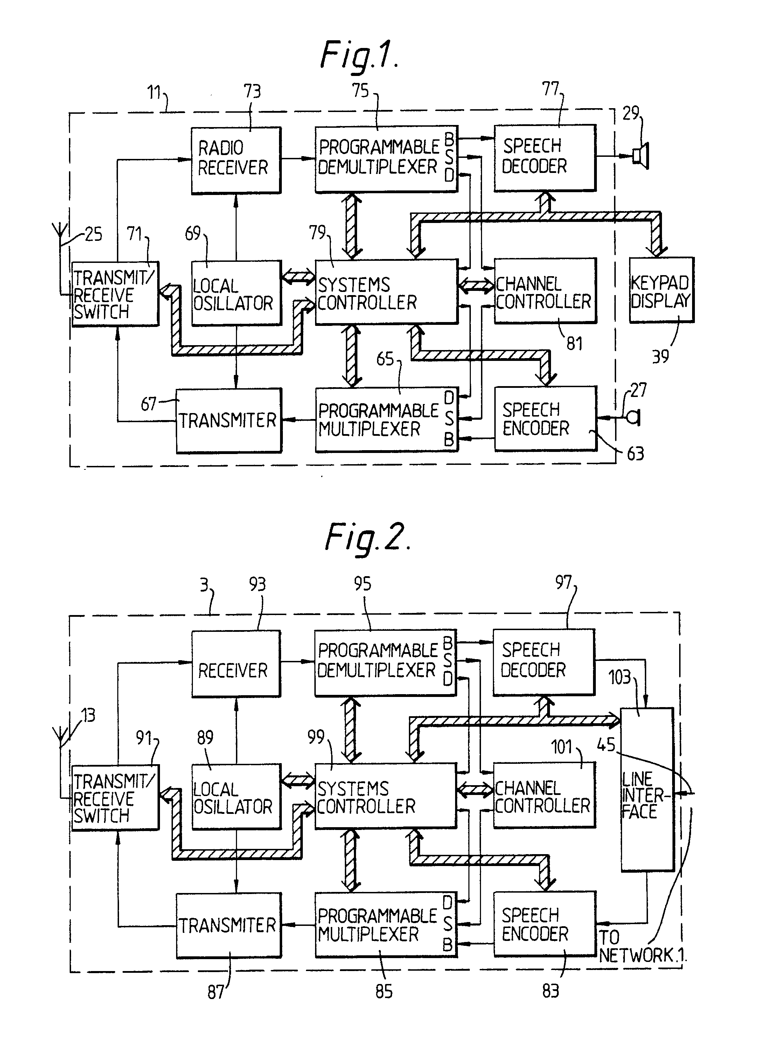

Referring to Figure 1, a block diagram of the control circuitry of the handset 11 is shown. Speech sounds received by the microphone 27 are converted into an electrical signal which is provided to a speech encoder 63. The speech encoder 63 includes an analogue-to-digital converter which converts the analogue electrical signal from the microphone 27 into 8-bit digital signals with a sampling rate of 8 kHz. This results in a total bit rate of 64 kbit per second pulse code modulation (PCM).

The 8-bit PCM data words are then compressed to 4-bit data words, in Adaptive Differential Pulse Code Modulation (ADPCM). In this coding system, each 4-bit word represents the change in value between the successive samples, rather than the absolute sample values themselves. This is an effective data compression technique for signals which change relatively slowly, such as speech signals. The 32 kbit per second data stream provides the contents of the B channel, and is presented to a B channel input of a programmable multiplexer 65.

The programmable multiplexer 65 also receives D channel data and S channel data at respective inputs. While the handset 11 is operating in multiplex 1, the programmable multiplexer stores the continuously received 32 kbit per second data stream from the speech encoder 63. The programmable multiplexer 65 outputs data in bursts, in accordance with the burst mode operation of the radio link, at 72 kbit per second in accordance with the data rate of the radio link. Thus, once in each 2ms burst period, the programmable multiplexer will output 64 bits of B channel data previously received from speech encoder 63 and stored, and will sandwich the B channel data between 2 or 4 bits of D channel data to form the multiplex 1.2 or multiplex 1.4 data stream.

The data stream burst from the programmable multiplexer 65 is provided to a transmitter 67, which modulates the radio carrier frequency, received from a local oscillator 69, in accordance with the received data stream. The resulting radio frequency burst is provided to the aerial 25 via a transmit/receive switch 71. The transmit/receive switch 71 connects the transmitter 67 to the aerial 25 during the transmit part of each burst period and connects the aerial 25 to a radio receiver 73 during the receive part of each burst period.

During the receive part of each burst period, the receiver 73 demodulates the received signal from the aerial 25, using a carrier frequency signal from the local oscillator 69. The demodulated 72 kbit per second data stream burst is provided by the receiver 73 and presented to a programmable demultiplexer 75.

The programmable demultiplexer 75 allocates the received data bits between the B channel, the S channel and the D channel in accordance with the multiplex structure in which the handset 11 is currently operating. When the handset is operating in multiplex 1, the 64 B channel bits received in each data burst are stored in the programmable demultiplexer 75, and are then output to a speech decoder 77.

The programmable demultiplexer 75 or speech decoder 77 repeats the pattern of bit reversals applied to the B channel data by the encoder in the base station 3, to obtain the correct data values.

The speech decoder 77 then performs the inverse of the ADPCM algorithm used to encode the speech data, so as to obtain 8-bit words at a rate of 8 kword per second. The speech decoder then converts this digital data to analogue data in a digital-to-analogue signal to the speaker 29. The speaker 29 converts the analogue electric signal to sound to be heard by the user.

During multiplex 1 operation, the speech encoder 63 provides B channel data to the programmable multiplexer 65 at 32 kbit per second. Thus in each 2ms burst period, the programmable multiplexer 1 burst carries 64 B channel bits, the radio link carries the B channel at an effective average bit rate equal to the bit rate provided by the speech encoder 63. Similarly, the effective average bit rate of received B channel data matches the bit rate of the continuous data transmission from the programmable demultiplexer 75 to the speech decoder 77. Thus, there is an effective continuous bidirectional B channel communication, in spite of the time division duplex burst mode nature of the radio link.

The operation of the handset is controlled by a system controller 79, and the timing of operations is controlled, in order to ensure burst synchronisation, in response to signals from an S channel controller 81. The system controller 79 is typically a microprocessor-based or microcomputer-based control system, including a processor, a program memory and a random access memory. The S channel controller 81 may be implemented as a separate microprocessor or may be implemented in software for the same processor as the system controller 79.

The system controller 79 sends control signals to the programmable multiplexer 65 and the programmable demultiplexer 75, to instruct them which multiplex structure to adopt, and also to give them timing signals so that they are properly synchronised with the radio link burst structure. The programmable multiplexer 65 and programmable demultiplexer 75 may also send signals to the system controller 79 to inform it if a buffer used to store the data signals in the multiplexer or demultiplexer is approaching overflow or is empty.

Control signals from the system controller 79 control the transmit/receive switch 71, so that it connects the transmitter 67 and the receiver 73 to the aerial 25 alternately with the correct timing.

The system controller 79 selects the radio channel on which the handset 11 is operating at any given moment, and instructs the local oscillator 69 to generate a signal for the transmitter 67 and receiver 73 at the appropriate frequency. In a system intended for use in the UK in accordance with the regulations issued by the Department of Trade and Industry, the handset 11 may operate on any one of forty channels having carrier frequencies at 100kHz spacings in the range 864.15MHz to 868.05MHz. The system controller 79 will inform the local oscillator 69 which channel has been selected, and the local oscillator 69 will inform the system controller 79 when its output signal has reached the selected frequency.

The system controller 79 also controls the D channel. It receives incoming D channel data from the programmable demultiplexer 75 and provides outgoing D channel data for transmission to the programmable multiplexer 65. Some received D channel data is used purely to control the operation of the system controller 79, and some transmitted D channel data is generated within the system controller 79. Such data includes transmitted and received handshake signals and various identification signals which are exchanged between the handset 11 and a base station 3 during the establishment of a radio link. However, other types of transmitted D channel data will result from actions taken by the user, and other types of received D channel data must be passed on to the user. For this reason, the system controller 79 also has a control signal connection with a keypad and possibly a display unit (not shown).

When a user is initiating a telephone call from the handset 11, the telephone number to be dialled will be entered through the keypad (not shown). The key depressions will be notified by the keypad/display unit 39 to the system controller 79, which will encode them for transmission in the D channel. In this way, the base station 3 is informed of the telephone number dialled by the user, and can transmit the appropriate dialling signal to the telecommunications network 1.

When the user of the handset 11 wishes to initiate a call, and therefore presses one of the keys on the keypad, the keypad/display unit 39 will notify this to the system controller 79. The system controller 79 searches through the RF channels, by changing the frequency of the local oscillator 69, until an appropriate channel is found. The system controller 79 then instructs the programmable multiplexer 65 to operate in multiplex 3, and instructs the S channel controller 81 to provide the portable part channel marker CHMP to the programmable multiplexer 65 as the S channel synchronisation word. The transmit/receive switch 71 is controlled to connect the aerial 25 to the transmitter 67 and the receiver 63 in the pattern required for multiplex 3 operation, and the system controller 79 ensures that the switching of the transmit/receive switch 71 is synchronised with the multiplex 3 operation of the programmable multiplexer 65.

During receive periods, the programmable demultiplexer 75 passes any received data to the S channel controller 81. The received data should include SYNCF. When this synchronisation word is identified, the S channel controller 81 provides the system controller 79 with the burst timing of the received signals. The system controller 79 then instructs the programmable demultiplexer 75 to decode received data as multiplex 2, in accordance with the received burst timing. Once the received channel data has been decoded by the system controller 79, it will instruct the programmable multiplexer 65 to switch to multiplex 2 with timing synchronised with the burst timing information from the S channel controller 81 to provide SYNCP to the programmable multiplexer 65 in place of CHMP.

Figure 2 shows a schematic block diagram of a base station 3.

The programmable multiplexer 85, the transmitter 87, the local oscillator 89, the transmit/receive switch 91, the receiver 93 and the programmable demultiplexer 95 are substantially identical with the corresponding parts in the handset 11. The S channel controller 101 of the base station 3 is also similar to the S channel controller 81 of the handset 11, except that the base station S channel controller 101 is designed to recognise CHMP and SYNCP in the incoming S channel data, and to provide CHMF and SYNCF to the programmable multiplexer for transmission, instead of the other way round.

The operation of the system controller 99 is generally similar to the operation of the system controller 79 of the handset 11, but there are some differences. First, when the base station 3 is trying to set up a radio link with a handset 11, it transmits in multiplex 2 rather than multiplex 3, and so the instructions to the programmable multiplexer 85 and the timing signals to the transmit/receive switch 91 in these circumstances are different.

When the base station 3 is scanning the radio channels to detect whether a handset 11 is calling it, it expects the handset 11 to be calling using multiplex 3. Accordingly, once the S channel controller 101 has notified the system controller 99 that the handset channel marker CHMP has been received, the system controller 99 will instruct the programmable demultiplexer 95 to treat incoming signals as having the data structure of multiplex 3. Once the base station 3 has sent a reply to a received multiplex 3 signal, it expects the handset 11 to change to multiplex 2, and therefore it will instruct the programmable demultiplexer 95 accordingly at this time.

Since the burst timing of the handset 11 is slaved to the timing of the base station 3, except during multiplex 3 transmissions, the timing information received by the system controller 99 from the S channel controller 101 is not used to control the timing of the operations of the programmable multiplexer 85. The timing of the programmable multiplexer 85 and the transmit/receive switch 91 is determined by an internal clock of the system controller 99. However the programmable demultiplexer 95 is controlled in accordance with the received burst timing, both to enable correct decoding of multiplex 3 transmissions from a handset 11 and to compensate for the effect of RF transmission delays on transmissions from the handset 11. The system controller 99 may also use synchronisation timing information from the S channel controller 101 as one way of determining that a communication link with a handset 11 has broken down through loss of burst synchronisation.

An area in which the operations of the system controller 99 in the base station 3 are different from the operation of the system controller 79 in the handset 11 is in its processing of D channel data. The signalling data received by the base station 3 from the telecommunications network will be different from the signalling data input to the handset 11 by a user, and there will be corresponding differences in the D channel data received by each part over the radio link. Accordingly, the programming of the system controller 99 in the details of its handling of D channel data will be different.

Also, the actions taken by the base station 3 during link initiation are different from the actions of the handset 11, as will be described in detail later, and so the respective system controllers 99, 79 will be programmed differently in this respect.

The base station control circuit includes a line interface 103, to which the telephone connection 45 is made from network 1. Signalling data output by the system controller 99, typically in response to received D channel data, is conditioned by the line interface 103 and placed on the telephone connection 45. Signals received from the telecommunications network over the telephone connection 45 are similarly interpreted by the line interface 103 and provided to the system controller 99 as required. The line interface 103 also receives the decoded B channel data stream from the decoder 97 and places this on the telephone connection 45, and receives the speech or other communication signals from the telephone connection 45 and provides these to the encoder 83.

The manner of operation of the line interface 103 will be chosen in accordance with the nature of the telecommunications network to which the base station 3 is connected. In particular, if the base station 3 is connected to a conventional PSTN, the line interface 103 will send and receive analogue signals over the telephone connection 45, whereas if the base station 3 is connected to an ISDN, the line interface 103 will normally be required to send and receive 64 kbit per second pulse mode modulated signals.

In order to allow the base station 3 to communicate with various different types of handset 11, the encoder 83 and decoder 97 are enabled to carry out various encoding and decoding operations. They may be able to use a plurality of different adaptive differential pulse code modulation algorithms. They may also be able to use a digital data processing algorithm or to pass signals through unaltered to enable the base station 3 to be usable with portable computer and computer terminal type handsets 11 as mentioned above. During the link set up procedure, while the base station 3 and the handset 11 are communicating in multiplex 2, the handset 11 can indicate through the D channel the type of coding and decoding it requires, and the system controller 99 of the base station 3 will then control the encoder 83 and decoder 97 to operate accordingly once multiplex 1 transmissions have begun.

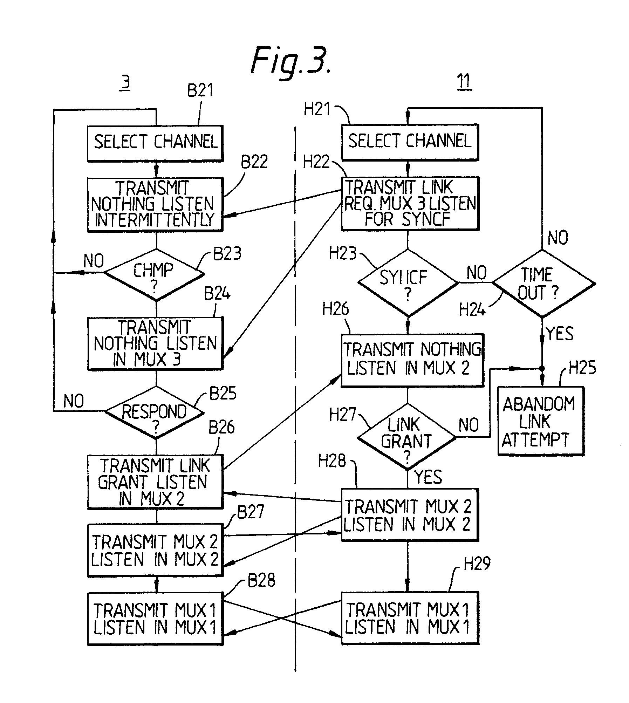

Referring to Figure 3 a flow diagram is shown depicting the actions taken by a handset 11 and a base station 3 when a link is set up in response to a call made by the handset 11.

If a base station 3 is active but not participating in a link, it will scan the channels to discover whether any handset 11 is attempting to call it. In step B21, it will select a channel, and then in step B22 it will listen for any transmissions on the selected channel. In step B22 the base station 3 will transmit nothing.

During the listen periods in step B22, the programmable demultiplexer 95 will pass all received data to the S channel controller 101, in order to detect any CHMP channel marker synchronisation word transmitted by a handset 11. The base station 3 will only respond to the CHMP synchronisation word, and not the SYNCP synchronisation word, since reception of the SYNCP synchronisation word indicates transmission from a handset 11 which has already made contact with some other base station 3.

If the base station 3 determines in step B23 that the channel marker code word CHMP has not been received within a predetermined period, it returns to step B21, selects the next channel, and begins to listen on that channel.

If the handset 11 is turned on but is not participating in any link, it will be performing a similar channel-scanning loop. However, this operation is interrupted if the user presses a key indicating that a link to a base station should be established. In this case, the handset scans the channels in step H21, to select a channel on which no radio transmissions are currently taking place.

In step H22, the handset 11 will begin transmitting on the channel it has selected using multiplex 3. In between the multiplex 3 transmissions, its programmable demultiplexer 75 will pass any received data to the S channel controller 81, in order to recognise the SYNCF synchronisation word which should be contained in any reply from a base station 3.

In the D channel of its multiplex 3 transmissions, the handset 11 will send a D channel code word having a PID field and a LID field. In the PID field it will place its own handset identification code. In the LID field, it may place one of a variety of codes, depending of the service required by the user.

Since the handset 11 is being used with a public "telepoint" system (which is a system in which a user can make telephone calls through any one of various base stations in various geographical locations) the LID code may identify the telepoint company or system with which the handset is registered and through which the user wishes to make the telephone call.

In an environment where several competing telepoint systems are present, it is preferable to define one or more LID codes which the handset 11 can transmit to make contact with any base station within range, regardless of the system to which it belongs, and further LID codes which the handset 11 can transmit in order to make contact only with base stations of one specified system.

The various LID codes are stored in the system controller 79 of the handset 11 together with its PID code. These codes may be placed in one of the memories of the system controller 79 during manufacture of the handset 11 or may be entered subsequently through the keypad in a registration process, or may be received in a registration radio link.

If the base station 3 determines in step B23 that the handset channel marker CHMP has been received, it will pass to step B24. In this step, it will still not transmit, but its programmable demultiplexer 95 will be instructed to decode received data using the multiplex 3 structure, having the burst timing derived from the received CHMP word. Accordingly, the D channel data transmitted by the handset 11 will now be passed to the system controller 99 of the base station 3, where it will be decoded. The system controller 99 will examine the PID and LID codes, and decide on the basis of these whether to respond to the handset 11.

If it is determined in step B25 that no PID and LID codes requiring a response have been received within a pre-set period, the base station 3 will return to step B21, select a new channel, and begin listening for further transmissions from handsets wishing to set up a link.

If the base station 3 determines in step B25 that it should respond to the handset 11, it will move to step B26, and begin to transmit in multiplex 2 and send SYNCF in the S channel. The base station 3 will transmit a D channel data word containing the PID code received from the handset 11, and an arbitrary LID code to identify the link being set up. The base station 3 will expect the handset 11 now to switch to multiplex 2 transmissions, using the SYNCP S channel synchronisation word.

In the D channel code word transmitted in multiplex 3 by the handset 11 in step H22, the normal handshake code will be replaced by the "link request" code. In the D channel code word transmitted in multiplex 2 by the base station 3 in step B26, in reply to the handset 11, the normal handshake code will be replaced by the "link grant" code.

In step H23, the handset 11 determines whether it has received the SYNCF synchronisation word from a base station 3 within a pre-set period. If not, it passes to step H24. In this step, it determines whether a time out period has expired since the handset 11 first begun to request the link. If the time out period has not expired, the handset 11 returns to step H21, selects another free channel, and attempts to establish the link on that channel. If the time out period has expired, the handset passes to step H25, and abandons the attempt to set up the link.

If it is determined in step H23 that SYNCF has been received, the handset 11 passes to step H26. In this step, it temporarily ceases transmission, and decodes the received multiplex 2 transmissions from the bases station 3, while using the received SYNCF synchronisation word to achieve burst synchronisation with the transmissions from the base station 3.

The handset 11 is now able to decode the D channel information transmitted by the base station 3. In step H27 it determines whether it has received within a pre-set period a D channel code word containing its PID and the "link grant" code. If such a D channel code word is not received within the pre-set period, the handset 11 moves to step H25, and abandons the attempt to set up the link. If the handset 11 does receive a link grant message accompanied by its own PID, it moves to step H28. In this step, it begins multiplex 2 transmissions, using SYNCP as the S channel synchronisation word. In its D channel message, it will continue to send its own PID code, but will change the LID code to the link identification code received from the base station 3. In this step, the handset 11 will continue to listen for multiplex 2 transmissions from the base station 3, and will maintain burst synchronisation with the base station 3.

Once the base station 3 has received a multiplex 2 transmission from the handset 11, using SYNCP as the S channel synchronisation word and returning the LID code sent out by the base station , it knows that the link grant message has been received.

The base station 3 now moves to step B27, in which it ceases to transmit the link grant message, and exchanges D channel information with the handset 11 using the multiplex 2 data structure. Once the handset 11 has reached step H28 and the base station 3 has reached step B27, the radio link has been established.

Once a link chosen by the handset 11 has been established, despite possible interference, signalling should be possible between the base station 3 and handset 11.

The base station has it local RSSI information generated by its radio receiver 93, Figure 2, which is stored in the system controller 99.

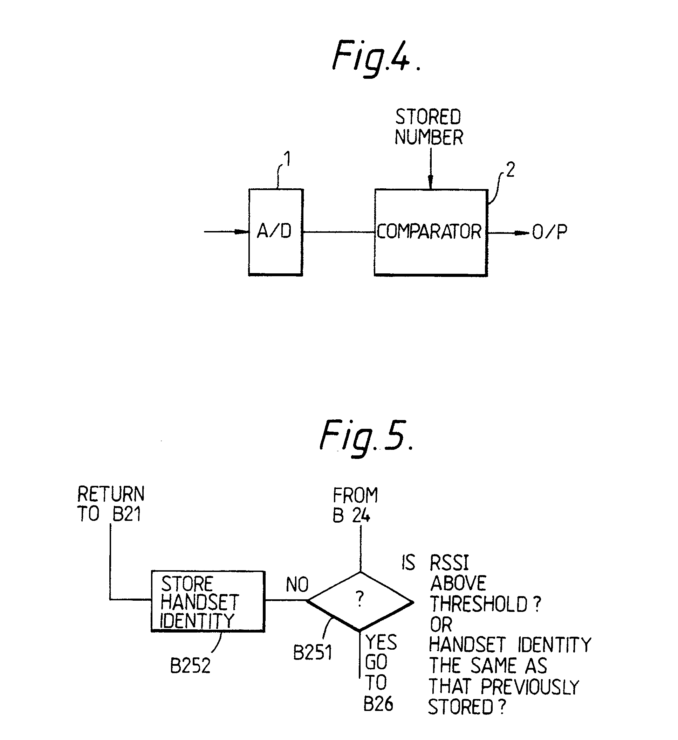

Referring to Figure 4, the analogue to digital converter 1 and digital comparator 2 would be located in the system controller 99 of the base station shown in Figure 2.

The receiver 93 of the base station receives the radio signal by way of aerial 43 and receive/transmit switch 91, and generates an analogue signal RSSI representing the received signal strength. The converter 1 converts this analogue signal into a digital signal which is then compared with an internally stored number in the system controller 99 by the digital comparator 2. The digital comparator output, O/P indicates whether the RSSI signal is above or below the predetermined threshold represented by the stored number, and this output is processed in accordance with the actions defined by step B25 of Figure 3, modified in accordance with actions identified in Figure 5.

In step B25, if the RSSI is determined to be above a predetermined threshold level, by step B251, step B26 is performed. If the RSSI is below the predetermined level, step B252 is performed and the handset identity is stored. No response is made and the base station returns to step B21, and steps B21, B22, B23, B24 and B25 are repeated until such time as the threshold level is exceeded, or the same handset identity is detected, permitting step 26 to be performed.

The base station 3, performing step B27A determines whether the current handset selected channel is suitable. If it is, the base station performs step B28. If the current channel is not suitable, in step B27B the base station selects a suitable channel based upon its own RSSI information. In step B27C, the base station 3 instructs the handset 11, to re-establish the link on the new channel. The base station 3 performs step B27D and switches to the new channel, and repeats steps B22-B27. Meanwhile the handset 11, after performing step H28, returns to step H22, and starts radiating on the new channel, and steps H22-H27 are repeated. Subsequently the base station 3 will instruct the beginning of multiplex 1 communication. The handset 11 will move to step H29 and the base station will move to step B28. B channel communication may now begin.

The above description has been of one embodiment of the present invention. It will be appreciated by those skilled in the art that the invention finds utility in any situation where there is a concentration of radio base units sharing a common housing and antenna. For example, users of cordless PBX's or cordless key systems would benefit from the present invention.

## Claims

1. Telecommunications apparatus comprising at least one base unit (3) for connection to a telecommunications system, and at least one handset (11) arranged to communicate with the base unit, each base unit (3) including means (1, 2) for obtaining signal strength information in respect of each communication channel, and said handset (11) is arranged to select a channel for communication with the base unit characterised in that the telecommunications apparatus is arranged to perform a method comprising the steps of: causing the base unit (3) in dependence upon its signal strength information, to select a suitable channel for communication, causing the base unit (3) to instruct the handset (11) to switch to the selected channel, and causing the base unit (3) to switch to the selected channel.

2. Telecommunications apparatus as claimed in Claim 1, and further characterised in that the base station (3) include a radio receiver (93) which generates the signal strength information, and a system controller (99) in which the information is stored.

3. Telecommunications apparatus as claimed in Claim 2, and further characterised in that the system controller (99) located in the base unit, executes steps of the method claimed in Claim 1.

## Fig.1.

## Fig.2.

EP 0 448 197 A2

# Fig.3.

# Fig.4.

STORED
NUMBER

```
      1                    2
  ┌───────┐        ┌──────────────┐
→ │  A/D  │ ────── │  COMPARATOR  │ ──→ O/P
  └───────┘        └──────────────┘
```

# Fig.5.

RETURN
TO B21

FROM
B 24

```
        ┌──────────┐
        │  STORE   │   NO      ╱◇╲      IS  RSSI
  ──────│ HANDSET  │─────────◇  ?  ◇    ABOVE
        │ IDENTITY │          ╲◇╱       THRESHOLD ?
        └──────────┘                    OR
            B252        B251    YES      HANDSET  IDENTITY
                                GO       THE  SAME  AS
                                TO       THAT  PREVIOUSLY
                                B26      STORED ?
```

11